# EUROPÄISCHE PATENTSCHRIFT

(11) **EP 1 470 208 B1**
(45) Veröffentlichungstag und Bekanntmachung des Hinweises auf die Patenterteilung: **20.09.2006**
(21) Anmeldenummer: 03702481.7
(22) Anmeldetag: 21.01.2003
(51) Int. Cl.: C11D 1/72, C11D 7/26, B01F 17/42

(54) **ALKYLGLYKOLALKOXYLATE ODER -DIGLYKOLALKOXYLATE, IHRE MISCHUNGEN MIT TENSIDEN UND IHRE VERWENDUNG**
ALKYLGLYCOL ALKOXYLATES OR ALKYLDIGLYCOL ALKOXYLATES, MIXTURES THEREOF WITH TENSIDES AND THEIR USE
ALCOXYLATES D'ALKYLGLYCOL OU D'ALKYLDIGLYCOL, MELANGES DE CES SUBSTANCES AVEC DES TENSIOACTIFS ET LEUR UTILISATION

(30) Priorität: 21.01.2002 DE 10202007; 30.09.2002 DE 10245886
(43) Veröffentlichungstag der Anmeldung: 27.10.2004
(73) Patentinhaber: BASF Aktiengesellschaft, 67056 Ludwigshafen (DE)
(72) Erfinder: NÖRENBERG, Ralf, 55218 Ingelheim (DE); OETTER, Günter, 67227 Frankenthal (DE); TROPSCH, Jürgen, 67354 Römerberg (DE); GÜMBEL, Helmut, 67814 Dannenfels (DE); LICHTERFELD-WEBER, Nicole, 67354 Römerberg (DE); KROENER, Hubertus, 67435 Neustadt (DE); SEELMANN-EGGEBERT, Hans-Peter, 67117 Limburgerhof (DE)
(74) Vertreter: Isenbruck, Günter
(86) Internationale Anmeldenummer: PCT/EP2003/000551
(87) Internationale Veröffentlichungsnummer: WO 2003/060049

(56) Entgegenhaltungen:
- EP-A- 0 620 270
- US-A- 3 882 038

## Beschreibung

Die vorliegende Erfindung betrifft Alkylglykolalkoxylate oder -diglykolalkoxylate, Mischungen von Alkylglykolalkoxylaten oder -diglykolalkoxylaten untereinander und mit Tensiden, diese enthaltende Mittel und Formulierungen und die Verwendung derartiger Alkylglykolalkoxylate oder -diglykolalkoxylate in wässrigen Formulierungen oder Sprühanwendungen, bevorzugt in tensidhaltigen Formulierungen, die auch Dispersionen oder Emulsionen enthalten können, z.B. in Beschichtungsmitteln, Kosmetik- und Agroformulierungen.

Die schnelle Benetzung von Oberflächen spielt in vielen Bereichen des täglichen Lebens und in vielen industriellen Prozessen, beispielsweise bei der Reinigung oder Beschichtung von Substraten, eine zentrale Rolle. In vielen Formulierungen werden deshalb unterschiedlich große Mengen von Alkoholen wie Ethanol oder Isopropanol eingesetzt, um beispielsweise die Oberflächenspannung zu erniedrigen und damit das Benetzungsvermögen der Formulierungen zu verbessern. Dabei ist es üblich, wässrigen Formulierungen oft größere Mengen dieser Alkohole beizumischen. Die physiologische Wirkung der Alkohole ist allerdings bedenklich, und die Exposition des Anwenders solcher Formulierungen ist durch den hohen Dampfdruck der Alkohole hoch. Außerdem sorgen die Eigenschaften des Alkohols als Lösungsmittel gerade bei kunststoffhaltigen Oberflächen durch Anlösen der Oberflächen für teilweise irreparable Oberflächenschäden. Auch längerkettige Alkohole wie Octylalkohol oder Decylalkohol können die mit ihrer Anwendung verbundenen physiologischen Probleme nicht vollständig beseitigen. Daher sollten heute beispielsweise in Tensidformulierungen, die vom Anwender direkt gehandhabt werden, nur geringe Mengen an Alkoholen oder kein Alkohol vorliegen. Für sehr schnell netzende Formulierungen, wie Feuchthaltemittel in der Druckindustrie oder Additive für Beschichtungsformulierungen, zum Beispiel zur Papierveredelung durch einen sogenannten Papierstrich, stellen sie jedoch immer noch einen notwendigen Bestandteil dar.

Seit einigen Jahren ist die sehr gut netzende Wirkung von sehr hydrophoben, kompakten Alkoholen, die aus Acetylen und Aldehyden hergestellt werden können, bekannt. Es handelt sich dabei insbesondere um Dihydroxyalkine. Diese Produkte sind jedoch nicht mit allen Reinigungsmittelformulierungen verträglich und können oft nur mit Hilfe von Solubilisatoren wie Cumolsulfonat verwendet werden. Oft muß dabei eine größere Menge des Solubilisators im Vergleich zum Netzhilfsmittel eingesetzt werden, so daß sich hohe Folgekosten durch die Verwendung der Dihydroxyalkine ergeben. Zudem wird die Wirkung des Netzhilfsmittels bei der Abmischung mit größeren Mengen an Solubilisatoren verschlechtert.

Ein üblicher Weg, um die Benetzungsgeschwindigkeit von wässrigen Formulierungen zu erhöhen, besteht in der Verwendung von Tensiden, die sich an Grenzflächen anlagern und dabei die Grenzflächenspannung erniedrigen. Während durch Zumischen von Alkoholen wie Ethanol oder Isopropanol zu wässrigen Formulierungen das resultierende Wasser/Lösemittel-Gemisch eine gegenüber Wasser niedrigere Oberflächenspannung aufweist und damit ein verbessertes Netzverhalten zeigt, ist die Benetzung oder Oberflächenbelegung bei Verwendung von Tensidsystemen zeitabhängig. Die Tensidmoleküle müssen zunächst an die Oberfläche diffundieren und dort einen Grenzflächenfilm aufbauen, wodurch die Grenzflächenspannung bzw. die Oberflächenspannung im Falle des Kontakts von Wasser und Luft sinkt. Bei sehr schnellen Prozessen wie etwa Sprüh- oder Netzprozessen, beispielsweise von Feuchtmitteln in der Druckindustrie, ist die Zeit, in der die Oberflächen- oder Grenzflächenspannung durch das Tensidsystem auf den Gleichgewichtswert abgesenkt wird, entscheidend. Die Dynamik des Tensidsystems ist dabei für die Benetzungsgeschwindigkeit von großer Bedeutung.

Die Belegung der Grenzfläche durch Tensidmoleküle erfolgt teilweise durch freie Moleküle (Monomere) sowie durch den Aufbruch der Aggregate und nachfolgende Adsorption, so daß die Austauschgeschwindigkeit des Tensids zwischen Lösung und Mizelle entscheidend wird. Es ist bekannt, daß Solubilisatoren wie Cumolsulfonat die Aggregation des Tensids in Lösung erschweren und daher die Löslichkeit heraufsetzen. Dadurch können hydrophobe Netzmittel bei erhöhten Konzentrationen formuliert werden. Die Wirkung des Netzmittels in der meistens verdünnt eingesetzten Formulierung wird dadurch aber herabgesetzt. Die Solubilisatoren sind an sich nicht an der Grenzfläche aktiv. Es gibt allerdings auch als Solubilisatoren bezeichnete Amphiphilstrukturen, die hydrophobe Moleküle in Form von Micellen solubilisieren. Die Wechselwirkung mit den Tensiden erfolgt unspezifisch und nicht direkt. Daher greifen die Solubilisatoren auch nicht in den Prozeß der Grenzflächenbelegung direkt ein.

Niedrig ethoxylierte niedermolekulare Alkohole wie Butyldiglykol und Hexylglykol sind als nicht-wässrige Lösungsmittel bekannt und werden in Verbindung mit Tensiden in Formulierungen eingesetzt. Diese Verbindungen sind jedoch ebenso wie die Alkohole nicht physiologisch unbedenklich, und ihre Leistungsfähigkeit ist nicht mit der Leistungsfähigkeit der Dihydroxyalkine oder Alkohole vergleichbar.

Ferner werden derzeit Alkoholethoxylate niedriger Alkohole als geeignete Netzmittel eingesetzt. Solche Produkte enthalten jedoch herstellbedingt häufig Mengen an Alkohol, der wiederum maßgeblich zur schnellen Benetzung beiträgt und gegebenenfalls bei sehr kurzen Benetzungszeiten die einzige netzende Komponente ist.

In der WO 95/27034 sind beispielsweise Detergenzzusammensetzungen beschrieben, die in Form einer Öl-in-Wasser-Mikroemulsion vorliegen. Sie enthalten ein kurzkettiges ethoxyliertes nicht-ionisches Tensid, das eine kurze Alkylkettenlänge aufweist. Die ethoxylierten nicht-ionischen Tenside werden durch Ethoxylierung kurzkettiger Alkohole erhalten. Die Schrift ist ein Beispiel für Veröffentlichungen, die Alkoholethoxylate beschreiben.

Der Einsatz von ethoxylierten Alkanolen in Reinigungsmitteln ist ferner in der EP-A 0 620 270 beschrieben. Die dort beschriebenen Reinigungszusammensetzungen enthalten jedoch keine Tenside, sondern ein polares und ein nicht polares oder schwach polares Lösungsmittel. Die dort eingesetzten Alkylenglykolalkylether sollen eine Affinität sowohl für das polare Lösungsmittel als auch für das nicht-polare Lösungsmittel aufweisen und damit als Löslichkeitsvermittler dienen.

Die Verwendung von Alkoxylaten von kürzerkettigen Alkoholen als schaumarme Netzmittel ist zudem in der EP-A 0 681 865 beschrieben. Sie werden dabei in Kombination mit Propylenoxid-modifizierten kürzerkettigen Alkanolen eingesetzt. Sie können insbesondere in Textilvorprodukten eingesetzt werden.

In der US 5,340,495 sind Zusammensetzungen beschrieben, die zur Entfernung von Druckerfarbe in Druckmaschinen eingesetzt werden können. Die Reinigungsflüssigkeiten enthalten beispielsweise eine Hauptmenge eines Sojaölmethylesters und geringere Mengen an ethoxyliertem Hexanol. Die in allgemeiner Form beschriebenen ethoxylierten C₄₋₁₀₋Alkohole, die 2 bis 10 Mol Ethylenoxid pro Mol Alkohol enthalten, werden als Lösevermittler und Entfemer für Druckerfarbe beschrieben.

Die US 3,882,038 offenbart Reinigungsmittelzusammensetzungen enthaltend Glykolether.

Aufgabe der vorliegenden Erfindung ist die Verbesserung des Netzverhaltens bekannter Netzmittel oder Wasch- oder Reinigungsmittel. In derartigen Mitteln soll die Grenzflächenspannung vermindert und gleichzeitig die Einstellung der Grenzflächenspannung beschleunigt werden. Die Nachteile der bekannten Additive für Wasch-, Reinigungs- und Netzmittel sollen vermieden werden. Die Dynamik der bekannten Tensidsysteme soll verbessert werden oder mit toxikologisch unbedenklichen Inhaltsstoffen erreicht werden. Zudem sollen z.B. in Formulierungen wie in Papierstrich-Dispersionen für das "spray coating" die Tröpfchengröße und das Schäumen vermindert werden, und die Bedruckbarkeit der erhaltenen Papiere soll verbessert werden. Zudem sollen in Sprühanwendungen die Formulierungen so optimiert werden, dass die Tröpfchengröße und das Schäumen vermindert werden. Beispiele dafür sind Papierstreichfarbe, Farben, Lacke, Reiniger oder kosmetische oder medizinische Sprays.

Die Aufgabe wird erfindungsgemäß gelöst durch Alkylglykolalkoxylate oder -diglykolalkoxylate, erhältlich durch Alkoxylierung von C₄₋₈-Alkylglykolen oder -diglykolen mit C₂₋₅-Alkoxiden bis zu einem mittleren Alkoxylierungsgrad von 1 bis 8, bezogen auf die C₄₋₈-Alkylglykole oder -diglykole.

Die Aufgabe wird auch erfindungsgemäß gelöst durch die Verwendung von C₂₋₅₋Alkoxylaten von C₄₋₈-Alkylglykolen oder -diglykolen, die im Mittel einen Alkoxylierungsgrad von 1 bis 8 aufweisen, zur Verminderung der Grenzflächenspannung, insbesondere bei kurzen Zeiten von üblicherweise unter 1 Sekunde, und Beschleunigung der Einstellung der Grenzflächenspannung in wässrigen Tensidformulierungen oder wässrigen Dispersionen.

Es wurde zudem gefunden, daß die C₂₋₅-Alkoxylate von C₄₋₈-Alkylglykolen oder -diglykolen, die im Mittel einen Alkoxylierungsgrad von 1 bis 8 aufweisen, zur Erniedrigung der Viskosität von tensidhaltigen Formulierungen eingesetzt werden können.

Es wurde erfindungsgemäß gefunden, daß ein synergistischer Effekt bei der Verwendung von Tensiden zusammen mit den erfindungsgemäßen Alkoxylaten, speziell Ethoxylaten niedriger Alkylglykole oder -diglykole auftritt, der dafür sorgt, daß die Grenzflächenspannung zwischen der wässrigen Lösung und Luft innerhalb weniger Sekundenbruchteile auf den Wert beispielsweise alkoholhaltiger Formulierungen sinkt. Durch die Kombination der erfindungsgemäßen sehr schwach grenzflächenaffinen niederen Alkylglykolalkoxylate oder -diglykolalkoxylate mit Tensiden kann sowohl das Niveau der Grenzflächenspannung erniedrigt werden, als auch die Geschwindigkeit, mit der das Niveau erreicht wird, stark erhöht werden.

Dieser synergistische Effekt tritt insbesondere bei Mischungen aus C₂₋₅-, vorzugsweise aus C₂₋₄-Alkoxylaten von C₄₋₈-Alkylglykolen oder -diglykolen, die im Mittel einen Alkoxylierungsgrad von 1 bis 8 aufweisen, und Tensiden, die in einer Menge von 5 g/l Wasser gelöst eine Grenzflächenspannung von weniger als 45 mN/m bei 20°C zeigen, und/oder Dihydroxyalkinen oder Derivaten davon auf. Die Erfindung betrifft daher auch diese Mischungen.

Die erfindungsgemäßen Mischungen können damit eine Vielzahl von bekannten Formulierungen, beispielsweise alkoholhaltige Formulierungen, ersetzen.

Die nachstehenden Ausführungen beziehen sich ebenso auf Alkyldiglykole wie auf Alkylglykole bzw. deren Alkoxylate.

Die erfindungsgemäßen Mischungen enthalten als eine Komponente C₂₋₅-Alkoxylate, das heißt Alkoxylate mit C₂₋₅-Alkoxiden, von C₄₋₈-Alkylglykolen, die im Mittel einen Alkoxylierungsgrad von 1 bis 8 aufweisen. Bei den Alkylglykolen kann es sich um lineare oder verzweigte Alkylglykole handeln. Die Anbindung des C₄₋₈-Alkylrestes an den Glykol kann endständig oder an einer anderen Position entlang der Alkylkette erfolgen. Vorzugsweise handelt es sich um lineare Alkylglykole, insbesondere um lineare, endständige Alkylglykole. Vorzugsweise weisen die Alkylreste der Alkylglykole 4 bis 6 Kohlenstoffatome auf. Der Alkoxylierungsgrad beträgt im Mittel 1 bis 8, vorzugsweise 2 bis 6. Zur Alkoxylierung können dabei vorzugsweise C₂₋₄-Alkoxide eingesetzt werden. Vorzugsweise werden Ethylenoxid, Propylenoxid, Butylenoxid oder Gemische davon eingesetzt. Besonders bevorzugt wird Ethylenoxid eingesetzt. Die bevorzugten Bereiche beziehen sich auch auf die Alkylglykolalkoxylate und Alkyldiglykolalkoxylate an sich.

Die Herstellung erfolgt, ausgehend von alkoholfreien, vorzugsweise reinen Alkylglykolen und Alkyldiglykolen und nicht, wie sonst üblich, ausgehend von Alkanolen, durch Alkoxylierung. Daher enthalten die Produktgemische auch keine verbleibenden Alkanole, sondern höchstens Alkylglykole. Es ergibt sich eine für Alkylglykole spezifische Verteilung des Alkoxylierungsgrades. Durch das Herstellungsverfahren sind die Alkylglykolalkoxylate frei von Alkoholen.
Alkoxylate sind oligomere oder polymere Umsetzungsprodukte mit Alkoxiden. Aufgrund der dem Fachmann bekannten Kinetik von Polymerisationen kommt es zwangsläufig zu einer statistischen Verteilung von Homologen, deren Mittelwert üblicherweise angegeben wird. Die Häufigkeitsverteilung der Homologen beinhaltet insbesondere bei niedrigen Alkoxylierungsgraden den Ausgangsstoff. Durch die Wahl des Katalysators kann zwar die Verteilung in gewissem Umfang beeinflußt werden, am Prinzip der Verteilungskurve ändert sich aber nichts. Reine Alkyloligoglykole lassen sich nur durch destillative oder chromatographische Aufarbeitung herstellen und sind daher teuer. Außerdem hat sich gezeigt, daß die Verteilung der Homologen einen deutlichen Einfluß auf das Aggregationsverhalten hat.

Die hier beschriebenen Alkoxylate besitzen die für das Aggregationsverhalten und die anderen erfindungsgemäßen Eigenschaften wichtige Homologenverteilung, ohne Alkohol zu enthalten.

Die Bestimmung der Verteilung der Alkoxylierungsgrade kann durch chromatographische Verfahren erfolgen.

Nachstehend sind die Verteilungskurven für ein übliches n-Hexanolethoxylat (+ 3 EO), abgeleitet von n-Hexanol, und ein n-Hexylglykolethoxylat (+ 2 EO), abgeleitet von n-Hexylglykol, einander tabellarisch gegenübergestellt. In der ersten Spalte ist angegeben, wieviel Ethylenoxid (0 - 6) an den n-Hexylrest (C6) gebunden vorliegt. Im Mittel enthalten beide Verbindungen gleichviele EO-Einheiten.

| Flächen % | | |
|---|---|---|
| Chemie | n-Hexanol + 3 EO | n-Hexylglykol + 2 EO |
| C6 E00 | 2,4 | 0 |
| C6 E01 | 5 | 8,3 |
| C6 E02 | 10,2 | 20,3 |
| C6 E03 | 13,5 | 24,6 |
| C6 E04 | 14,3 | 19,4 |
| C6 E05 | 13,5 | 12,9 |
| C6 E06 | 11,2 | 7,5 |
| Rest | 29,9 | 7 |

Die Muster wurden hergestellt mit KOH als Katalysator durch Einleiten von 2 oder 3 mol/(mol Ausgangsstoff) Ethylenoxid zum jeweiligen Ausgangsstoff. Die Analyse erfolgte durch Gelpermeationschromatographie (GPC) in THF. Das Hexanolsignal wurde durch Aufstocken mit Hexanol identifiziert, die höheren Homologen aus der Abfolge der weiteren Signale. Die Auswertung erfolgte durch die Integration der Signalflächen.

Da im erfindungsgemäßen Produktgemisch keine Alkohole vorliegen, ist es weitgehend geruchsfrei. Als Tenside können erfindungsgemäß alle Tenside eingesetzt werden, die in einer Menge von 5 g/l Wasser gelöst eine Grenzflächenspannung von weniger als 45 mN/m bei 20°C zeigen. Bei den Tensiden kann es sich allgemein um alkoxylierte Alkohole, Amide, Säuren, Betaine, Aminoxide oder Amine, aber auch um Dihydroxyalkine und Derivate und Gemische davon handeln. Die Geschwindigkeit der Einstellung des Endniveaus der Grenzflächenspannung kann dabei von der Molekülarchitektur, wie der Kettenlänge und dem Verzweigungsgrad des Alkohols, der Länge und Solvatisierung des Alkoxylats, der Tensidkonzentration und der Tensidaggregation abhängen. Im allgemeinen diffundieren kleinere Aggregate schneller als große Aggregate.

Vorzugsweise sind die Tenside nicht-ionische Tenside und ausgewählt aus C₂₋₅-, vorzugsweise C₂₋₄-Alkoxylaten von C₉₋₂₀-, vorzugsweise C₉₋₁₅-, insbesondere C₉₋₁₃₋Alkanolen, die im Mittel einen Alkoxylierungsgrad von 3 bis 30, vorzugsweise 4-15, insbesondere 5 bis 12 aufweisen, und Mischungen davon. Insbesondere werden C₉₋₁₁₋Alkanole zum Aufbau der Tenside eingesetzt. Dabei kann es sich um lineare oder verzweigte Alkanole handeln. Bei einem verzweigten Alkohol liegt der Verzweigungsgrad vorzugsweise im Bereich von 1,1 bis 1,5. Die Alkoxylierung kann mit beliebigen C₂₋₄₋Alkoxiden und Gemischen davon erfolgen. Beispielsweise kann mit Ethylenoxid, Propylenoxid oder Butylenoxid alkoxyliert werden. Besonders bevorzugt werden Ethylenoxid, Propylenoxid oder Gemische davon eingesetzt. Insbesondere bevorzugt ist Ethylenoxid. Der Alkoxylierungsgrad beträgt im Mittel 3 bis 8, vorzugsweise 3 bis 6. Derartige nicht-ionische Tenside sind bekannt und beispielsweise in EP-A 0 616 026 und EP-A 0 616 028 beschrieben. In diesen Schriften sind auch kürzerkettige Alkylalkoxylate erwähnt.

Die als Tenside eingesetzten nicht-ionischen Tenside können auch durch Dihydroxyalkine oder Derivate davon ersetzt sein. Es kann sich ferner um schaumarme oder schaumdämpfende Tenside handeln, vgl. auch EP-A 0 681 865 und die eingangs zitierte Literatur. Schaumarme und schaumdämpfende Tenside sind dem Fachmann bekannt.
In den erfindungsgemäßen Mischungen werden die Alkylglykolalkoxylate vorzugsweise in einer Menge von 0,05 oder 0,1 bis 20, bevorzugt 0,1 bis 10 Gew.-%, besonders bevorzugt 0,5 bis 7 Gew.-%, insbesondere 0,8 bis 5 Gew.-% eingesetzt, bezogen auf das Gesamtgewicht der Mischung. Der verbleibende Anteil der Mischungen entfällt auf die Tenside. Diese Mengenangaben gelten auch für aus den Mischungen oder Alkylglykolalkoxylaten hergestellte Wasch-, Reinigungs-, Netzmittel, Pflege-, Pflanzenschutzmittel oder kosmetische Mittel oder andere Zusammensetzungen.

Wasch- oder Reinigungsmittel, die eine Kombination der Tenside mit Alkanolalkoxylaten enthalten können, sind beispielsweise in WO 01/32820 beschrieben. Die dort beschriebenen Mittel enthalten ferner feste Partikel mit einer Teilchengröße von 5 bis 500 nm. Derartige Partikel sind in den erfindungsgemäßen Mischungen in der Regel nicht enthalten. Die in der WO-Anmeldung beschriebenen Glykolether werden dort als Hydrophilisierungsmittel beschrieben. Die erfindungsgemäßen Mischungen können die in WO 01/32820 beschriebenen weiteren Inhaltsstoffe aufweisen.

Die vorliegende Erfindung betrifft auch Wasch-, Reinigungs- oder Netzmittel, die ein wie vorstehend beschriebenes Gemisch oder Alkylglykolalkoxylat enthalten. Die erfindungsgemäßen Mischungen können zur Formulierung von Mitteln in allen Bereichen dienen, in denen hochdynamische Formulierungen verwendet werden. Beispiele dafür sind
- Allzweckreiniger, Textilwaschmittel, Sprühreiniger, Handgeschirrspülmittel zur Reinigung im privaten, industriellen und institutionellen Bereich einschließlich der Metallbearbeitung,
- kosmetische, pharmazeutische und Pflanzenschutzformulierungen.

Solche Formulierungen enthalten üblicherweise weitere Inhaltsstoffe wie Tenside, Gerüst-, Duft- und Farbstoffe, Komplexbildner, Polymere und andere Inhaltsstoffe. Typische Formulierungen sind beispielsweise in WO 01/32820 beschrieben. Weitere für unterschiedliche Anwendungen geeignete Inhaltsstoffe sind in EP-A 0 620 270, WO 95/27034, EP-A 0 681 865, EP-A 0 616 026, EP-A 0 616 028, DE-A 42 37 178 und US 5,340,495 beispielhaft beschrieben.

Allgemein können die erfindungsgemäßen Mischungen in allen Bereichen eingesetzt werden, in denen die Wirkung von grenzflächenaktiven Stoffen notwendig ist.

Ebenso wie die klassischen Solubilisatoren erhöhen die erfindungsgemäß eingesetzten ethoxylierten niederen Alkylglykole die Löslichkeit, insbesondere von nicht-ionischen Tensiden und sorgen damit gleichzeitig für eine klare Lösung hydrophober Tenside. Eine Erniedrigung der Grenzflächenspannung der Solubilisatoren allein wird zwar auch beobachtet, jedoch fällt diese weit geringer aus als die Wirkung von Tensiden und Alkoholen.

Durch die Verwendung nicht-tensidischer Strukturen weisen die erfindungsgemäßen Formulierungen eine bessere Umwelt- und Hautverträglichkeit auf im Vergleich zu beispielsweise in EP-A 0 616 026 beschriebenen Systemen. Im Unterschied zu den gängigen Solubilisatoren wie Cumolsulfonat erfolgt die Wechselwirkung spezifisch mit den Tensiden. Damit greifen die erfindungsgemäß eingesetzten alkoxylierten Alkylglykole aktiv in die Belegung der Grenzfläche ein und beschleunigen die Einstellung des Grenzflächengleichgewichts.
Es ist erfindungsgemäß nicht notwendig und nicht erwünscht, daß ein Restgehalt an Alkohol in den erfindungsgemäßen Mischungen oder Formulierungen vorliegt. Gemäß einer Ausführungsform sind die erfindungsgemäßen Mischungen, Mittel und Formulierungen frei von Alkoholen und bevorzugt auch von Alkylglykolen bzw. Diglykolen, insbesondere von C₄₋₈-Alkylglykolen und C₉₋₁₃-Alkanolen. Erfindungsgemäß wurde gefunden, daß ohne einen Restgehalt an Alkohol, der üblicherweise bei niedrigen Alkoholalkoxylaten herstellungsbedingt im Produkt enthalten ist, durch Einsatz der erfindungsgemäßen Alkylglykolalkoxylate Tensidformulierungen mit hoher Grenzflächendynamik formuliert werden können.

Die erfindungsgemäße Netzwirkung kann dabei durch eine dynamische Messung der Oberflächenspannung, beispielsweise durch Verwendung eines Blasendrucktensiometers, bestimmt werden. Ein entsprechendes Vorgehen ist beispielsweise in S.S. Dukhen, G. Kretzschmar, R. Miller (Ed.), Dynamics of adsorption at liquid interfaces, Elsevier, 1995, beschrieben. Die Netzwirkung auf Oberflächen kann dabei durch eine dynamische Messung der Grenzflächenspannung bestimmt werden. Eine derartige Methode ist die videogestützte, zeitaufgelöste Randwinkelmessung.

Die Erfindung wird nachstehend anhand von Beispielen näher erläutert:

### Beispiel 1

Eine wässrige Lösung von 2 g/l eines C₁₃-C₁₅-Oxoalkoholethoxylats mit einem mittleren Ethoxylierungsgrad von 7 (Lutensol® AO 7 der BASF AG) wird mit einem Blasendrucktensiometer (Modell MPT 2 von Lauda) untersucht. Man findet im Gleichgewicht eine Grenzflächenspannung von 42 mN/m, die nach 0,7 s erreicht wird.

Durch Zugabe von 1 g/l Cumolsulfonat wird weder die Lage noch die Dynamik der Tensidlösung beeinflußt.

Durch Zugabe von 1 g/l Hexylglykolethoxylat mit einem mittleren Ethoxylierungsgrad von 4 wird der Gleichgewichtswert auf 39 mN/m verschoben. Der Gleichgewichtswert wird bereits nach 0,4 s erreicht.

Andererseits wird in einem Gemisch von 1 g/l des Laurylalkoholethoxylats mit einem mittleren Ethoxylierungsgrad von 7 und 1 g/l des Hexylglykolethoxylats im Gleichgewicht eine Grenzflächenspannung von 42 mN/m gemessen, die nach 0,7 s erreicht wurde. Beim Einsatz von Hexylglykolethoxylat kann damit die Menge an Tensid stark vermindert werden.

### Beispiel 2

Ein Dihydroxyalkin (Surfynol® 104 H von Air Products) wurde in einer typischen Feuchtmittelformulierung der Druckindustrie untersucht. Die Feuchtmittelformulierung enthielt 150 g/l Glycerin, 770 g/l Wasser, 20 g/l Natriumdihydrogenphosphat, 40 g/l Bernsteinsäure, 10 g/l Surfynol 104 H. Um die trübe Lösung klarzustellen, wurden 40 g/l Cumolsulfonat (Formulierung A) oder 20 g/l Hexylglykolethoxylat mit einem Ethoxylierungsgrad von 4 (Formulierung B) zugegeben. Sodann wurde die Formulierung im Verhältnis 1:50 verdünnt, so daß letztendlich ein Gehalt von 0,2 g/l Dihydroxyalkin vorlag. Es wurde die dynamische Grenzflächenspannung mit dem Blasendrucktensiometer gemessen.

Für die Formulierung A wird im Gleichgewicht ein Grenzflächenspannungsniveau von 50 mN/m gemessen, das nach 0,5 s erreicht wird. Für die Formulierung B wird im Gleichgewicht ein Niveau von 43 mN/m gefunden, das nach 0,2 s erreicht wird.

Daraus wird deutlich, daß die erfindungsgemäße Formulierung B sowohl in ihren statischen als auch in ihren dynamischen Eigenschaften Vorteile gegenüber der Vergleichsformulierung A hat.

## Patentansprüche

1. Alkylglykolalkoxylate oder -diglykolalkoxylate die frei von Alkoholen sind, erhältlich durch Alkoxylierung von C₄₋₈-Alkylglykolen oder -diglykolen mit C₂₋₅₋Alkoxiden bis zu einem mittleren Alkoxylierungsgrad von 1 bis 8, bezogen auf die C₄₋₈-Alkylglykole oder -diglykole.

2. Mischung aus C₂₋₅-Alkoxylaten von C₄₋₈-Alkylglykolen oder -diglykolen, die im Mittel einen Alkoxylierungsgrad von 1 bis 8 aufweisen, gemäß Anspruch 1, und Tensiden, die in einer Menge von 5 g/l Wasser gelöst eine Grenzflächenspannung von weniger als 45 mN/m bei 20°C zeigen, und/oder Dihydroxyalkinen oder Derivaten davon.

3. Mischung nach Anspruch 2, **dadurch gekennzeichnet, daß** die Tenside nicht-ionische Tenside sind und ausgewählt sind aus C₂₋₅-Alkoxylaten von C₉₋₂₀-Alkanolen, die im Mittel einen Alkoxylierungsgrad von 3 bis 30 aufweisen, und Mischungen davon.

4. Mischung nach Anspruch 2, **dadurch gekennzeichnet, daß** die Tenside schaumarme oder schaumdämpfende Tenside sind.

5. Wasch-, Reinigungs- oder Netzmittel oder kosmetische, pharmazeutische oder Pflanzenschutzformulierung, enthaltend eine Mischung gemäß einem der Ansprüche 2 bis 4 oder Alkylglykolalkoxylate oder -diglykolalkoxylate gemäß Anspruch 1.

6. Mischung nach einem der Ansprüche 2 bis 4 oder Mittel nach Anspruch 5, enthaltend 0,1 bis 20 Gew.-% der C₂₋₅-Alkoxylate von C₄₋₈-Alkylglykolen oder -diglykolen, bezogen auf das Gesamtgewicht der Mischung oder des Mittels.

7. Verwendung von C₂₋₅-Alkoxylaten von C₄₋₈-Alkylglykolen oder -diglykolen, die im Mittel einen Alkoxylierungsgrad von 1 bis 8 aufweisen, gemäß Anspruch 1, zur Verminderung der Grenzflächenspannung und Beschleunigung der Einstellung der Grenzflächenspannung in wässrigen Tensidformulierungen oder wässrigen Dispersionen.

8. Verwendung von C₂₋₅-Alkoxylaten von C₄₋₈-Alkylglykolen oder -diglykolen, die im Mittel einen Alkoxylierungsgrad von 1 bis 8 aufweisen, gemäß Anspruch 1, zur Erniedrigung der Viskosität von tensidhaltigen Formulierungen.

## Claims

1. An alkylglycol alkoxylate or alkyldiglycol alkoxylate free from alcohols and obtainable by alkoxylation of C₄₋₈-alkylglycols or -diglycols with C₂₋₅-alkoxides to an average degree of alkoxylation of from 1 to 8, based on the C₄₋₈₋alkylglycols or -diglycols.

2. The mixture of C₂₋₅-alkoxylates of C₄₋₈-alkylglycols -or diglycols which, on average, have a degree of alkoxylation of from 1 to 8 according to claim 1, and surfactants which, dissolved in an amount of 5 g/l of water, exhibit an interfacial tension of less than 45 mN/m at 20°C, and/or dihydroxyalkynes or derivatives thereof.

3. The mixture according to claim 2, wherein the surfactants are nonionic surfactants and are chosen from C₂₋₅-alkoxylates of C₉₋₂₀-alkanols which, on average, have a degree of alkoxylation of from 3 to 30, and mixtures thereof.

4. The mixture according to claim 2, wherein the surfactants are low-foam or foam-suppressing surfactants.

5. A laundry detergent, cleaner or wetting agent or cosmetic, pharmaceutical or crop protection formulation comprising a mixture according to any of claims 2 to 4 or alkylglycol alkoxylates or alkyldiglycol alkoxylates according to claim 1.

6. The mixture according to any of claims 2 to 4 or composition according to claim 5, comprising 0.1 to 20% by weight of the C₂₋₅-alkoxylates of C₄₋₈₋alkylglycols or -diglycols, based on the total weight of the mixture or of the composition.

7. The use of C₂₋₅-alkoxylates of C₄₋₈-alkylglycols or -diglycols which, on average, have a degree of alkoxylation of from 1 to 8, according to claim 1, for reducing the interfacial tension and accelerating the establishment of the interfacial tension in aqueous surfactant formulations or aqueous dispersions.

8. The use of C₂₋₅-alkoxylates of C₄₋₈-alkylglycols or -diglycols which, on average, have a degree of alkoxylation of from 1 to 8, according to claim 1, for lowering the viscosity of surfactant-containing formulations.

## Revendications

1. Alcoxylates de glycols ou diglycols d'alkyle qui sont exempts d'alcools, que l'on peut obtenir par alcoxylation de glycols ou diglycols d'alkyle en C₄₋₈ avec des alcoxydes en C₂₋₅ jusqu'à un degré d'alcoxylation moyen de 1 à 8, par rapport aux glycols ou diglycols d'alkyle en C₄₋₈.

2. Mélange d'alcoxylates en C₂₋₅ de glycols ou diglycols d'alkyle en C₄₋₈, qui présentent en moyenne un degré d'alcoxylation de 1 à 8, selon la revendication 1, et de tensioactifs qui, dissous en quantité de 5 g/l d'eau, présentent une tension interfaciale inférieure à 45 mN/m à 20°C, et/ou de dihydroxyalcynes ou de leurs dérivés.

3. Mélange selon la revendication 2, **caractérisé en ce que** les tensioactifs sont des tensioactifs non ioniques et sont choisis parmi les alcoxylates en C₂₋₅ d'alcanols en C₉₋₂₀, qui présentent, en moyenne, un degré d'alcoxylation de 3 à 30, et leurs mélanges.

4. Mélange selon la revendication 2, **caractérisé en ce que** les tensioactifs sont des tensioactifs pauvres en mousse ou antimousse.

5. Agent de lavage, de nettoyage ou de mouillage ou formulation cosmétique, pharmaceutique ou phytosanitaire, contenant un mélange selon l'une quelconque des revendications 2 à 4 ou des alcoxylates de glycols ou diglycols d'alkyle selon la revendication 1.

6. Mélange selon l'une quelconque des revendications 2 à 4 ou agent selon la revendication 5, contenant 0,1 à 20 % en poids d'alcoxylates en C₂₋₅ de glycols ou diglycols d'alkyle en C₄₋₈, par rapport au poids total du mélange ou de l'agent.

7. Utilisation d'alcoxylates en C₂₋₅ de glycols ou diglycols d'alkyle en C₄₋₈, qui présentent en moyenne un degré d'alcoxylation de 1 à 8, selon la revendication 1, pour diminuer la tension interfaciale et accélérer le réglage de la tension interfaciale dans des formulations tensioactives aqueuses ou des dispersions aqueuses.

8. Utilisation d'alcoxylates en C₂₋₅ de glycols ou diglycols d'alkyle en C₄₋₈, qui présentent en moyenne un degré d'alcoxylation de 1 à 8, selon la revendication 1, pour réduire la viscosité de formulations tensioactives.
